# EUROPEAN PATENT SPECIFICATION

(11) **EP 2 828 315 B1**
(45) Date of publication and mention of the grant of the patent: **30.08.2017**
(21) Application number: 13717551.9
(22) Date of filing: 12.02.2013
(51) Int. Cl.: C08G 75/02

(54) **A PRODUCTION METHOD FOR ALIPHATIC POLYKETONE**
HERSTELLUNGSVERFAHREN FÜR EIN ALIPHATISCHES POLYKETON
PROCÉDÉ DE PRODUCTION DE POLYCÉTONE ALIPHATIQUE

(30) Priority: 20.03.2012 TR 201203179
(43) Date of publication of application: 28.01.2015
(73) Proprietor: Kordsa Teknik Tekstil A.S, Izmit / Kocaeli (TR)
(72) Inventor: SEN, Yasin, 41310 Kocaeli (TR)
(74) Representative: Dericioglu Kurt, Ekin
(86) International application number: PCT/IB2013/051127
(87) International publication number: WO 2013/140273

(56) References cited:
- Göran Verspui ET AL: "A Stable, Conspicuously Active, Water-Soluble Pd Catalyst for the Alternating Copolymerization of Ethene and CO in Water", Angew, Chem. Int. Ed., 23 February 2000 (2000-02-23), pages 804-806, XP055075334, DOI: 10.1002/(SICI)1521-3773(20000218)39:4<804: :AID-ANIE804>3.0.CO;2-Q Retrieved from the Internet: URL:http://onlinelibrary.wiley.com/doi/10. 1002/%28SICI%291521-3773%2820000218%2939:4 %3C804::AID-ANIE804%3E3.0.CO;2-Q/abstract [retrieved on 2013-08-14] cited in the application
- WILHELMUS P. MUL ET AL: "Highly active, recyclable catalyst for the manufacture of viscous, low molecular weight, CO-ethene-propene-based polyketone, base component for a new class of resins", INORGANICA CHIMICA ACTA, vol. 327, 10 January 2002 (2002-01-10), pages 147-159, XP055075692, DOI: 10.1016/S0020-1693(01)00697-1 cited in the application
- JIANG Z ET AL: "WATER-SOLUBLE PALLADIUM(II) COMPOUNDS AS CATALYSTS FOR THE ALTERNATING COPOLYMERIZATION OF OLEFINS WITH CARBON MONOXIDE IN AN AQUEOUS MEDIUM", MACROMOLECULES, AMERICAN CHEMICAL SOCIETY, WASHINGTON, DC; US, vol. 27, no. 24, 21 November 1994 (1994-11-21), XP000480232, ISSN: 0024-9297, DOI: 10.1021/MA00102A034 cited in the application

## Description

### Field of the Invention

The present invention relates to a production method for aliphatic polyketone wherein ethylene and carbon monoxide monomers are polymerized by perfectly alternating copolymerization under high pressure in water using a palladium-diphosphine catalyst.

### Background of the Invention

In aliphatic polyketone production, the copolymerization of ethylene and carbon monoxide was first realized under heavy reaction conditions being 230 °C and 2000 atm pressure in 1941. German Patent document no DE863711, known in the state of the art, involves the said technique.

In following years, in 1951, it was shown with the United States Patent document no US2577208 that the said reaction could be performed in water with nickel (II) catalyst under more suitable conditions being 200 °C and 200 atm pressure.

Besides, in 1980s, the researchers at Shell Company proved that linear and perfectly alternating ethylene-carbon monoxide polymer could be synthesized effectively by using homogenous palladium-based catalyst systems. Today, the said catalyst system which makes possible to obtain aliphatic polyketone in high molecular weight comprises a palladium salt (preferably of a carboxy acid) (for example palladium acetate), a phosphorous or nitrogen based bidentate ligand, an anion of an acid (preferably an organic acid with pH≈2; for example trifluoroacetate), and optionally an organic oxidant such as 1,4-benzoquinone. The said method is performed by adding the ethylene-carbon monoxide gas mixture to the medium at 70-90°C under 50-60 bars after the catalyst system is added into the reactor containing methanol solvent.

In aliphatic polyketone production, some of the bidentate tertiary phosphine ligands used from past to present are as follows:

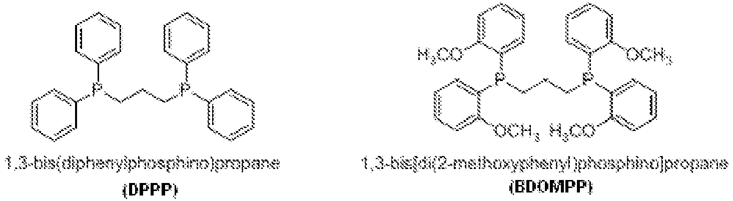

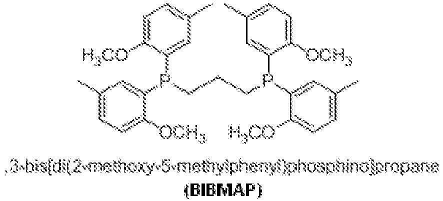

Polymerization reaction is generally performed in methanol solvent. Besides, ethylene-carbon monoxide copolymer formed as a result of the reaction absorbs approximately 80% methanol by volume during polymerization. Therefore, drying the polymer requires high amount of energy. Furthermore, even after an extensive drying process, trace amounts of methanol can still remain in the polymer. The remnant of methanol is undesired in sectors such as food packing industry.

In recent years polymerizations have been performed by using water-soluble palladium-diphosphane complexes , and thus "environment friendly polyketone synthesis method" has been developed since the reaction takes place in water. The said complexes are generally prepared by the reaction of palladium salts with sulfonated ligands (Jiang, Z.; Sen, A. Macromolecules 1994, 27,7215), (Verspui et al. Angew. Chem. Int. Ed. 2000, 39, 804).

In 2002, Mul (Inorg. Chim. Acta 2002, 327, 147) successfully synthesized low molecular weight ethylene-propylene-carbon monoxide terpolymer in methanol+water+methyl acetate+acetic acid solvent mixture by using 1,3-bis(di-(2-methoxy-5-sulfonatophenyl)phosphino)propane which is a sulfonated diphosphine ligand. The chemical formula of the said 1,3-bis(di-(2-methoxy-5-sulfonatophenyl)phosphino)propane ligand is as follows:

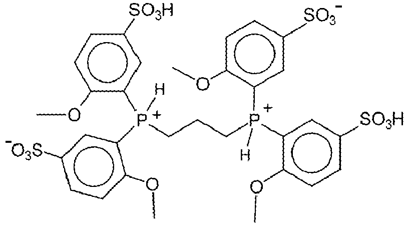

In the same study, the preparation procedure of the said ligand was shown. According to this procedure, 1,3-bis(di(2-methoxyphenyl)-phosphino)propane (BDOMPP) was sulfonated by reacting with sulfuric acid for 24 hr at room temperature to obtain the desired ligand. Sulfonation reaction took place at para-position to the methoxy groups present in BDOMPP as a result of electrophilic aromatic substitution reaction.

### Summary of the Invention

The objective of the present invention is to provide a method for the production of aliphatic polyketone, in which water is used as the reaction medium resulting in an environmentally friendly process.

Another objective of the present invention is to provide a production method for aliphatic polyketone, which is carried out by using a palladium-diphosphine catalyst.

A further objective of the present invention is to provide a production method for aliphatic polyketone, wherein the sulfo groups are in ortho-position relative to methoxy groups.

Yet another objective of the present invention is to provide a production method for aliphatic polyketone, wherein 1,3-bis(di(2-methoxy-3-sulfophenyl)-phosphino)propane (BDOMPP-S) ligand is used.

### Detailed Description of the Invention

A production method for aliphatic polyketones developed to fulfill the objective of the present invention is illustrated in the accompanying figure, in which;

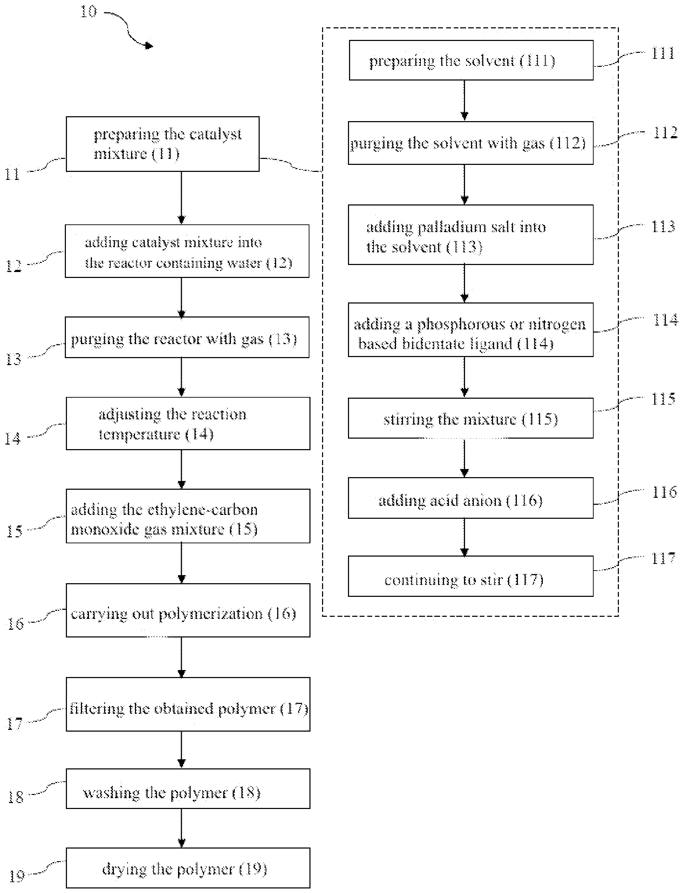

Figure 1 is the view of the flowchart of a production method for aliphatic polyketone.

A production method for aliphatic polyketone (10) developed to fulfill the objective of the present invention comprises the steps of
- preparing the catalyst mixture (11),
   - preparing the solvent (111),
   - purging the solvent with gas (112),
   - adding palladium salt into the solvent (113),
   - adding a phosphorous or nitrogen based bidentate ligand (114),
   - stirring the mixture (115),
   - adding acid anion (116),
   - continuing to stir (117),
- adding catalyst mixture into the reactor containing water (12),
- purging the reactor with gas (13),
- adjusting the reaction temperature (14),
- adding the ethylene-carbon monoxide gas mixture (15),
- carrying out polymerization (16),
- filtrating the obtained polymer (17),
- washing the polymer (18),
- drying the polymer (19).

In the inventive production method for aliphatic polyketone (10), first, the catalyst mixture used in obtaining aliphatic polyketone polymer is prepared (11). For this purpose, primarily,water or a mixture of water with a polar aprotic solvent is used in the step of preparing the solvent (111) used for dissolving the catalyst. In the preferred embodiment of the invention, at least one of the solvents such as acetone, tetrahydrofuran, methyl ethyl ketone, methyl acetate, N-methyl-pyrrolidone is used as aprotic solvent. In one embodiment of the invention, acetone is used as polar aprotic solvent.

In the next step, the gas is passed through this solvent and the solvent is purged for 30-60 minutes (112). In the preferred embodiment of the invention, the solvent is purged with nitrogen.

The palladium salt is added into the mixture through which the gas is passed to remove the oxygen (113). In the preferred embodiment of the invention, palladium acetate is used as the palladium salt.

In the next step, phosphorous or nitrogen based bidentate ligand is added into the mixture (114). In the preferred embodiment of the invention, 1,3-bis(di(2-methoxy-3-sulfophenyl)-phosphino)propane (BDOMPP-S), which is a bidentate tertiary phosphine ligand, is used as a bidentate ligand. The chemical formula of BDOMPP-S ligand is as follows:

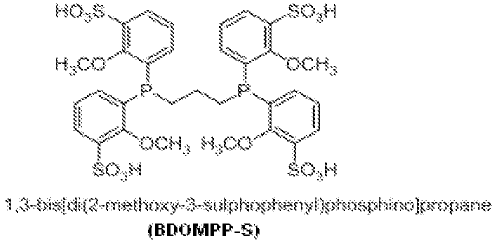

The liquid mixture, which was formed after the said additions, is stirred under nitrogen atmosphere at room temperature for 45-90 minutes (115).

An anion of an acid with a maximum pKa value of 4 is added into the liquid mixture (116), and the stirring is continued for at least 15 minutes (117). In the preferred embodiment of the invention, trifluoroacetate is used as an acid anion.

In the preferred embodiment of the invention, the molar ratios of the palladium salt, ligand and acid anion present in the catalyst mixture are 1:1.2:3 to 1:1.2:7, respectively.

After all the said processes, the catalyst solution is obtained as a liquid mixture. The said catalyst solution is then added into a reactor containing water (12). In the preferred embodiment of the invention, the volume of the water inside the reactor is 15-40 times the volume of the catalyst solution. The ratio of the palladium in the water before polymerization is preferably in the range of 0.01-100 micromole/L water.

The liquid mixture in the reactor is washed by passing gas through it (13). In the preferred embodiment of the invention, nitrogen is used as the gas. In one embodiment of the invention the said process is repeated three times consecutively with nitrogen at 50 bar.

After the oxygen present in the medium is removed with purging process, the temperature of the reactor is brought to the range of 60-110°C (14).

Then, ethylene-carbon monoxide mixture in ratio of 1:1 is added into the liquid mixture in the reactor under the pressure of 40-120 bar (15). As a result of the polymerization under these conditions (16), polymer is obtained.

The mixture which becomes slurry after the polymerization (16) is subjected to filtration (17), and the liquid part is removed. The obtained polymer is washed with water and methanol a few times (18), and then dried in a vacuum oven (19).

An aliphatic polyketone production method of the invention is described in Example 1.

### Example 1

After nitrogen is passed through the solvent mixture containing 20ml acetone and 20ml water for 45 minutes, palladium acetate (25 µmol) and BDOMPP (30 µmol) is added. This solution is stirred for 1 hour in nitrogen medium at room temperature. Then trifluoroacetic acid (0.1mmol) is added, and the solution is stirred for 15 minutes. The obtained light yellow catalyst solution is added into the high pressure reactor containing 1000ml water, and then the reactor is purged 3 times with nitrogen at 50 bar pressure. Then, the polymerization is started by bringing the temperature of the reactor to 80 °C and adding ethylene-carbon monoxide mixture in a ratio of 1:1 under 60 bar pressure. After the reaction, the slurry is filtered, the polymer is washed with water and methanol a few times, and then dried in a vacuum oven for one day at 80°C.

The ligand used in the inventive method is 1,3-bis(di(2-methoxy-3-sulfophenyl)-phosphino)propane (BDOMPP-S). The characteristic which makes this ligand different from the other aryl phosphorous bidentate ligands comprising sulfo groups is that instead of para-position, sulfo groups are at ortho-position to the methoxy groups. Furthermore, since the palladium-diphosphane complexes used in the said production method can dissolve in water, the said production method is characterized as environmentally friendly. Since the filtrate obtained after the polymerization contains active catalyst, it can be reused in the subsequent polymerizations and therefore polymer production becomes more economic and environmentally benign with this method.

Within the framework of these basic concepts, it is possible to develop various embodiments of the inventive production method for aliphatic polyketone. The invention cannot be limited to the examples described herein and it is essentially as defined in the claims.

## Claims

1. A production method for aliphatic polyketone (10) **comprising** the steps of
- preparing the catalyst mixture (11),
- preparing the solvent (111),
- purging the solvent with gas (112),
- adding palladium salt into the solvent (113),
- adding a phosphorous or nitrogen based bidentate ligand (114),
- stirring the mixture (115),
- adding acid anion (116),
- continuing to stir (117),
- adding catalyst mixture into the reactor containing water (12),
- purging the reactor with gas (13),
- adjusting the reaction temperature (14),
- adding the ethylene-carbon monoxide gas mixture (15),
- carrying out polymerization (16),
- filtering the obtained polymer (17),
- washing the polymer (18),
- drying the polymer (19), and **characterized by** the steps of
- preparing a catalyst solvent wherein water or a mixture of water with a polar aprotic solvent is used (111),
- adding a phosphorous or nitrogen based bidentate ligand which is 1,3-bis(di(2-methoxy-3-sulfophenyl)-phosphino)propane (BDOMPP-S) (114).

2. A production method for aliphatic polyketone (10) according to claim 1, **characterized by** the step of preparing a catalyst solvent wherein the polar aprotic solvent is acetone, tetrahydrofurane, methyl ethyl ketone, methyl acetate orN-methyl-pyrrolidone (111).

3. A production method for aliphatic polyketone (10) according to any of the preceding claims, **characterized by** the step of purging the catalyst solvent with gas (112), wherein it is purified from oxygen by passing gas through the solvent for 30-60 minutes.

4. A production method for aliphatic polyketone (10) according to any of the preceding claims, **characterized by** the step of purging the catalyst solvent with gas (112), wherein nitrogen is used as purging gas.

5. A production method for aliphatic polyketone (10) according to any of the preceding claims, **characterized by** the step of purging the catalyst solvent with gas (113), wherein palladium acetate is used as the palladium salt.

6. A production method for aliphatic polyketone (10) according to any of the preceding claims, **characterized by** the step of stirring the mixture (115), wherein the mixture is stirred under nitrogen atmosphere at room temperature for 45-90 minutes.

7. A production method for aliphatic polyketone (10) according to any of the preceding claims, **characterized by** the step of adding acid anion (116), wherein anion of an acid with maximum a maximum pKa value of 4 is added into the liquid mixture.

8. A production method for aliphatic polyketone (10) according to any of the preceding claims, **characterized by** the step of adding acid anion (116), wherein anion of trifluoroacetic acid is used as the acid anion.

9. A production method for aliphatic polyketone (10) according to any of the preceding claims, **characterized by** the step of adding acid anion (116), wherein the ratios of the palladium salt, ligand and the acid anion used in catalyst mixture are in the range of 1:1.2:3 to 1:1.2:7, respectively.

10. A production method for aliphatic polyketone (10) according to any of the preceding claims, **characterized by** the step of continuing to stir (117), wherein the stirring process is continued for at least 15 more minutes after adding acid anion (116).

11. A production method for aliphatic polyketone (10) according to any of the preceding claims, **characterized by** the step of adding the prepared catalyst mixture into the reactor containing water (12), wherein the volume of the water in the reactor is 15-40 times of the volume of the catalyst solution.

12. A production method for aliphatic polyketone (10) according to any of the preceding claims, **characterized by** the step of adding the prepared catalyst mixture into the reactor containing water (12), the palladium salt concentration in water in the reactor is in the range of 0.01-100 micromole palladium/L water.

13. A production method for aliphatic polyketone (10) according to any of the preceding claims, **characterized by** the step of purging the reactor with gas (13), wherein nitrogen is used as purging gas.

14. A production method for aliphatic polyketone (10) according to any of the preceding claims, **characterized by** the step of adjusting the reaction temperature (14), wherein the temperature of the reactor is brought to 60-110°C.

15. A production method for aliphatic polyketone (10) according to any of the preceding claims, **characterized by** the step of adding ethylene-carbon monoxide gas mixture (15), wherein the ethylene-carbon monoxide mixture is added into the liquid mixture in ratio of 1:1 under 40-120 bar pressure.

16. A production method for aliphatic polyketone (10) according to any of the preceding claims, **characterized by** the step of filtering the obtained polymer (17), wherein the liquid is separated from the polymer after the polymerization (16) is performed.

17. A production method for aliphatic polyketone (10) according to any of the preceding claims, **characterized by** the step of washing the polymer (18), wherein the polymer obtained as a result of the filtration process (17) is washed with water and methanol.

18. A production method for aliphatic polyketone (10) according to any of the preceding claims, **characterized by** the step of drying polymer (19), wherein the washed polymer is dried in a vacuum oven.

## Patentansprüche

1. Ein Herstellungsverfahren für aliphatisches Polyketon (10) **umfassend** die folgenden Verfahrensschritte;
- Vorbereiten der Katalysatormischung (11),
- Vorbereiten des Lösemittels (111),
- Spülen des Lösemittels mit Gas (112),
- Hinzufügen des Palladiumsalzes in das Lösemittel (113),
- Hinzufügen eines auf Phosphor oder Stickstoff basiierenden zweizähnigen Ligands (114),
- Rühren der Mischung (115),
- Hinzufügen des Säure-Anions (116),
- Fortsetzen des Rührens (117),
- Hinzufügen der Katalysatormischung in den Reaktor, der Wasser beinhaltet (12),
- Spülen des Reaktors mit Gas (13),
- Regeln der Reaktionstemperatur (14),
- Hinzufügen der Gasmischung von Äthylen-Kohlenstoff Monoxid (15),
- Ausführung der Polymerisation (16),
- Filtern des erhaltenen Polymers (17),
- Waschen des Polymers (18),
- Trocknen des Polymers (19); und **gekennzeichnet durch** die Schritte
- Vorbereiten eines Katalysator-Lösemittels, wobei Wasser oder eine Mischung von Wasser mit einem polar-aprotischen Lösemittels eingesetzt wird (111),
- Hinzufügen eines auf Phosphor oder Stickstoff basiierenden zweizähnigen Ligands, welcher 1,3-bis(di(2-Methoxy-3-Sulfophenyl)-Phosphino)Propan (BDOMPP-S) ist (114).

2. Ein Herstellungsverfahren für aliphatisches Polyketon (10) gemäß Anspruch 1, **gekennzeichnet durch** den Verfahrensschritt des Vorbereitens von einem Katalysator-Lösemittel, wobei das polaraprotische Lösemittel Azeton, Tetrahydrofuran, Methyl Äthyl Keton, Methyl Azetat oder N-Methyl-Pyrrolidon ist (111).

3. Ein Herstellungsverfahren für aliphatisches Polyketon (10) gemäß einem der vorhergehenden Ansprüche, **gekennzeichnet durch** den Verfahrensschritt des Spülens von Katalysator-Lösemittel mit Gas (112), wobei es mittels Durchführen des Gases durch das Lösemittel für 30-60 Minuten vom Sauerstoff gereinigt wird.

4. Ein Herstellungsverfahren für aliphatisches Polyketon (10) gemäß einem der vorhergehenden Ansprüche, **gekennzeichnet durch** den Verfahrensschritt des Spülens des Lösemittels mit Gas (113), wobei Stickstoff als Spülgas verwendet wird.

5. Ein Herstellungsverfahren für aliphatisches Polyketon (10) gemäß einem der vorhergehenden Ansprüche, **gekennzeichnet durch** den Verfahrensschritt der Spülung des Lösemittels mit Gas (113), wobei Palladium-Azetat als Palladiumsalz eingesetzt wird.

6. Ein Herstellungsverfahren für aliphatisches Polyketon (10) gemäß einem der vorhergehenden Ansprüche, **gekennzeichnet durch** den Verfahrensschritt des Rührens der Mischung (115), wobei die Mischung unter Stickstoff-Atmosphäre bei Zimmertemperatur für 45-90 Minuten durchgerührt wird.

7. Ein Herstellungsverfahren für aliphatisches Polyketon (10) gemäß einem der vorhergehenden Ansprüche, **gekennzeichnet durch** den Verfahrensschritt der Hinzufügung von Säure-Anion (116), wobei das Anion einer Säure mit maximal mit einem maximalen pKa-Wert von 4 in die flüssige Mischung dazugegeben wird.

8. Ein Herstellungsverfahren für aliphatisches Polyketon (10) gemäß einem der vorhergehenden Ansprüche, **gekennzeichnet durch** den Verfahrensschritt der Hinzufügung von Säure-Anion (116), wobei das Anion der Trifluoro-Ethansäure als Säure-Anion verwendet wird.

9. Ein Herstellungsverfahren für aliphatisches Polyketon (10) gemäß einem der vorhergehenden Ansprüche, **gekennzeichnet durch** den Verfahrensschritt der Hinzufügung von Säure-Anion (116), wobei die Verhältnisse von Palladiumsalz, Ligand und Säure-Anion, welche in der Katalysator-Mischung eingesetzt wurden, jeweils im Bereich von 1:1. 2:3 bis 1:1.2:7 liegen.

10. Ein Herstellungsverfahren für aliphatisches Polyketon (10) gemäß einem der vorhergehenden Ansprüche, **gekennzeichnet durch** den Verfahrensschritt der Fortsetzung des Rührens (117), wobei der Rührvorgang für zumindest 15 weitere Minuten nach der Hinzufügung von Säure-Anion (116) fortgesetzt wird.

11. Ein Herstellungsverfahren für aliphatisches Polyketon (10) gemäß einem der vorhergehenden Ansprüche, **gekennzeichnet durch** den Verfahrens schritt der Hinzufügung der vorbereiteten Katalysator-Mischung in den Reaktor, der Wasser (12) enthält, wobei das Volumen des Wassers im Reaktor 15 - 40 fach größer als Volumen der KatalysatorLösung ist.

12. Ein Herstellungsverfahren für aliphatisches Polyketon (10) gemäß einem der vorhergehenden Ansprüche, **gekennzeichnet durch** den Verfahrens schritt der Hinzufügung der vorbereiteten Katalysator-Mischung in den Reaktor, der Wasser (12) enthält, wobei die Konzentration von Palladiumsalz in dem im Reaktor befindlichen Wasser im Bereich von 0.01-100 Mikromol Palladium/L Wasser ist.

13. Ein Herstellungsverfahren für aliphatisches Polyketon (10) gemäß einem der vorhergehenden Ansprüche, **gekennzeichnet durch** den Verfahrensschritt des Spülens des Reaktors mit Gas (13), wobei Stickstoff als Spülgas eingesetzt wird.

14. Ein Herstellungsverfahren für aliphatisches Polyketon (10) gemäß einem der vorhergehenden Ansprüche, **gekennzeichnet durch** den Verfahrensschritt des Regelns der Reaktortemperatur (14), wobei die Temperatur des Reaktors auf 60-110°C gebracht wird.

15. Ein Herstellungsverfahren für aliphatisches Polyketon (10) gemäß einem der vorhergehenden Ansprüche, **gekennzeichnet durch** den Verfahrens schritt des Hinzufügens von der Äthylen-Kohlenstoff Monoxid-Gasmischung (15), wobei die Äthylen-Kohlenstoff Monoxid-Mischung zur flüssigen Mischung im Verhältnis von 1:1 unter 40-120 Bar Druck hinzugefügt wird.

16. Ein Herstellungsverfahren für aliphatisches Polyketon (10) gemäß einem der vorhergehenden Ansprüche, **gekennzeichnet durch** den Verfahrensschritt des Filterns von dem erhaltenen Polymer (17), wobei die Flüssigkeit aus dem Polymer getrennt wird, nachdem die Polymerisation (16) erfolgt ist.

17. Ein Herstellungsverfahren für aliphatisches Polyketon (10) gemäß einem der vorhergehenden Ansprüche, **gekennzeichnet durch** den Verfahrensschritt des Waschens von Polymer (18), wobei das als Ergebnis des Filtrations-Prozesses (17) erhaltene Polymer mit Wasser und Methanol gewaschen wird.

18. Ein Herstellungsverfahren für aliphatisches Polyketon (10) gemäß einem der vorhergehenden Ansprüche, **gekennzeichnet durch** den Verfahrens schritt der Trocknung des Polymers (19), wobei das gewaschene Polymer in einem Vakuum-Ofen getrocknet wird.

## Revendications

1. Procédé de production de polycétone aliphatique (10) comprenant les étapes consistant à:
- préparer le mélange de catalyseur (11),
- préparer le solvant (111),
- purger le solvant avec du gaz (112)
- ajouter du sel de palladium dans le solvant (113),
- ajouter un ligand bidentate à base de phosphore ou d'azote (114)
- remuer le mélange (115),
- ajouter d'anion acide (116),
- continuer à remuer (117),
- ajouter du mélange de catalyseur dans le réacteur contenant de l'eau (12),
- purger le réacteur avec du gaz (13)
- régler la température de réaction (14),
- ajouter le mélange de gaz oxyde d'éthylène-carbone (15)
- réaliser la polymérisation (16),
- filtrer le polymère obtenu (17),
- laver le polymère (18),
- sécher le polymère (19), et **caractérisé par** les étapes de
- préparer un solvant catalytique dans lequel de l'eau ou un mélange d'eau avec un solvant aprotique polaire est utilisé (111),
- ajouter d'un ligand bidentate à base de phosphore ou d'azote qui est le 1,3-bis (di (2-méthoxy-3-sulfophényl) -phosphino) propane (BDOMPP-S) (114).

2. Un procédé de production de polycétone aliphatique (10) selon la revendication 1, **caractérisé par** l'étape de préparation d'un solvant catalytique dans lequel le solvant aprotique polaire est l'acétone, le tétrahydrofurane, la méthyléthylcétone, l'acétate de méthyle ou la N-méthylpyrrolidone (111).

3. Un procédé de production de polycétone aliphatique (10) selon l'une quelconque des revendications précédentes, **caractérisé par** l'étape consistant à purger le solvant de catalyseur avec du gaz (112), dans lequel il est purifié à partir d'oxygène en faisant passer du gaz dans le solvant pendant 30 à 60 minutes.

4. Un procédé de production de polycétone aliphatique (10) selon l'une quelconque des revendications précédentes, **caractérisé par** l'étape consistant à purger le solvant de catalyseur avec du gaz (112), dans lequel de l'azote est utilisé comme gaz de purge.

5. Un procédé de production de polycétone aliphatique (10) selon l'une quelconque des revendications précédentes, **caractérisé par** l'étape consistant à purger le solvant de catalyseur avec du gaz (113), dans lequel de l'acétate de palladium est utilisé comme sel de palladium.

6. Un procédé de production de polycétone aliphatique (10) selon l'une quelconque des revendications précédentes, **caractérisé par** l'étape d'agitation du mélange (115), dans lequel le mélange est agité sous atmosphère d'azote à température ambiante pendant 45 à 90 minutes.

7. Un procédé de production de polycétone aliphatique (10) selon l'une quelconque des revendications précédentes, **caractérisé par** l'étape consistant à ajouter de l'anion acide (116), dans lequel on ajoute un anion d'un acide avec une valeur maximale de pKa de 4 dans le mélange liquide.

8. Un procédé de production de polycétone aliphatique (10) selon l'une quelconque des revendications précédentes, **caractérisé par** l'étape consistant à ajouter de l'anion d'acide (116), dans lequel l'anion d'acide trifluoroacétique est utilisé comme anion d'acide.

9. Un procédé de production de polycétone aliphatique (10) selon l'une quelconque des revendications précédentes, **caractérisé par** l'étape consistant à ajouter un anion d' acide (116), dans lequel les rapports du sel de palladium, du ligand et de l'anion d'acide utilisés dans le mélange de catalyseurs sont dans la plage de 1:1, 2:3 à 1:1, 2:7, respectivement.

10. Un procédé de production de polycétone aliphatique (10) selon l'une quelconque des revendications précédentes, **caractérisé par** l'étape consistant à continuer à agiter (117), dans lequel le processus d'agitation est poursuivi pendant au moins 15 minutes supplémentaires après addition d'anion acide (116).

11. Un procédé de production de polycétone aliphatique (10) selon l'une quelconque des revendications précédentes, **caractérisé par** l'étape consistant à ajouter le mélange de catalyseur préparé dans le réacteur contenant de l'eau (12), dans lequel le volume de l'eau dans le réacteur est de 15 à 40 fois du volume de la solution de catalyseur.

12. Un procédé de production de polycétone aliphatique (10) selon l'une quelconque des revendications précédentes, **caractérisé par** l'étape consistant à ajouter le mélange de catalyseur préparé dans le réacteur contenant de l'eau (12), la concentration de sel de palladium dans l'eau dans le réacteur est dans la plage de 0,01-100 micromole de palladium / L d'eau.

13. Un procédé de production de polycétone aliphatique (10) selon l'une quelconque des revendications précédentes, **caractérisé par** l'étape consistant à purger le réacteur avec du gaz (13), dans lequel de l'azote est utilisé comme gaz de purge.

14. Un procédé de production de polycétone aliphatique (10) selon l'une quelconque des revendications précédentes, **caractérisé par** l'étape d'ajustement de la température de réaction (14), dans laquelle la température du réacteur est portée à 60-110 °C.

15. Un procédé de production de polycétone aliphatique (10) selon l'une quelconque des revendications précédentes, **caractérisé par** l'étape consistant à ajouter du mélange oxyde d'éthylène-monoxyde de carbone (15), dans lequel le mélange oxyde d'éthylène-carbone est ajouté dans le mélange liquide en rapport de 1:1 sous pression de 40-120 bars.

16. Un procédé de production de polycétone aliphatique (10) selon l'une quelconque des revendications précédentes, **caractérisé par** l'étape consistant à filtrer le polymère obtenu (17), dans lequel le liquide est séparé du polymère après la polymérisation (16) est performée.

17. Un procédé de production de polycétone aliphatique (10) selon l'une quelconque des revendications précédentes, **caractérisé par** l'étape de lavage du polymère (18), dans lequel le polymère obtenu à la suite du procédé de filtration (17) est lavé avec de l'eau et du methanol.

18. Un procédé de production de polycétone aliphatique (10) selon l'une quelconque des revendications précédentes, **caractérisé par** l'étape consistant à sécher le polymère (19), dans lequel le polymère lavé est séché dans un four à vide.
